# EUROPEAN PATENT SPECIFICATION

(11) **EP 4 322 307 B1**
(45) Date of publication and mention of the grant of the patent: **17.12.2025**
(21) Application number: 23190185.1
(22) Date of filing: 08.08.2023
(51) Int. Cl.: H01M 50/417, H01M 50/451, H01M 50/457, H01M 50/489, H01M 50/491

(54) **A SEPARATOR FOR AN ELECTROCHEMICAL DEVICE AND AN ELECTROCHEMICAL DEVICE COMPRISING THE SAME**
SEPARATOR FÜR EINE ELEKTROCHEMISCHE VORRICHTUNG UND ELEKTROCHEMISCHE VORRICHTUNG DAMIT
SÉPARATEUR POUR DISPOSITIF ÉLECTROCHIMIQUE ET DISPOSITIF ÉLECTROCHIMIQUE LE COMPRENANT

(30) Priority: 09.08.2022 KR 20220099239
(43) Date of publication of application: 14.02.2024
(73) Proprietor: LG Energy Solution, Ltd., Seoul 07335 (KR)
(72) Inventor: JEONG, So Mi, 34122 Daejeon (KR); BAE, Won Sik, 34122 Daejeon (KR); LEE, So Yeong, 34122 Daejeon (KR); YOON, Yeo Ju, 34122 Daejeon (KR); KIM, Seong Jun, 34122 Daejeon (KR)
(74) Representative: Goddar, Heinz J.

(56) References cited:
- CN-A- 111 200 094
- CN-A- 112 272 891
- KR-A- 20180 055 277

## Description

### TECHNICAL FIELD

The present disclosure relates to a separator for an electrochemical device and an electrochemical device including the same, and a separator for an electrochemical device with improved electrolyte impregnation and an electrochemical device including the separator.

### BACKGROUND

An electrochemical device converts chemical energy into electrical energy using an electrochemical reaction. Recently, lithium secondary batteries, which have high energy density and voltage, long cycle life, and are usable in various fields, have been widely used.

These lithium secondary batteries consist of a positive electrode, a negative electrode, an electrolyte, a separator, *etc.,* and among them, the separator serves to separate a positive electrode and a negative electrode, prevents an electrical short-circuit between the two electrodes, and passes electrolytes and ions. Although, a separator is not involved in the electrochemical reaction of a lithium secondary battery, it has a significant effect on the performance and safety of the lithium secondary battery due to physical properties such as impregnation with electrolyte, degree of porosity, and thermal contraction.

Separators are divided into dry separators and wet separators depending on the formation method. In the case of a dry separator, it is prepared by forming a porous substrate by undergoing the following steps: 1) melting porous substrate components (*e.g*., polypropylene) to form a primary film; 2) slightly stretching the formed primary film and heat-setting to form a lamella-structured film with a mixed structure of non-crystalline/crystalline structures; and 3) stretching the film having a lamellar structure to uniaxially form pores. In dry separators, pores are regularly formed in the vertical direction of the membrane, and the pores have a high degree of straightness; therefore, lithium ions can easily move, and the electrical characteristics are excellent, and the heat resistance is higher than that of wet separators. In the case of a wet separator, it is prepared by forming a porous substrate by undergoing the following steps: 1) mixing a polymer resin and wax, melting the resultant, and extruding the resultant to form a film; 2) biaxially stretching the formed film to form pores; and 3) removing the wax. In the case of a wet separator, although the heat resistance may be poor due to irregular pores, it is advantageous in terms of thickness uniformity, easy thin filming, securing MD/TD strength, and battery stability.

Recently, there is an increasing demand for lithium secondary batteries with higher capacity and higher energy density, such as electric vehicles, and wet separators are mainly used for such lithium secondary batteries for electric vehicles. Such a wet separator has excellent insulation, chemical resistance, withstand voltage stability, and mechanical strength, but has a problem of somewhat poor electrolyte impregnation due to its low affinity for electrolyte.

CN 111 200 094 A belongs to the technical field of lithium battery diaphragms, and particularly relates to a high-strength and high-elongation lithium battery diaphragm and a preparation method thereof. The high-strength and high-elongation lithium battery diaphragm is prepared from the following raw materials: polyethylene, ethylene vinyl acetate containing flexible chain macromolecules, an auxiliary agent, an antioxidant and a plasticizer. According to the flexible chain macromolecules, ethylene vinyl acetate containing the flexible chain macromolecules is added into raw materials and mixed with the components such as polyethylene, the auxiliary agent, the antioxidant and the plasticizer for use, so that the melt processability of polyethylene is improved to a certain extent, and the condition of similar brittle fracture of the lithium battery diaphragm is improved.KR 10-2018-0055277 relates to a separator having a porous ethylene-vinyl acetate copolymer layer and a method of manufacturing the same, and more specifically, to a porous support; and a battery separator including a porous ethylene-vinyl acetate copolymer layer prepared by a phase inversion method at at least one of the upper and lower positions of the porous support.

### SUMMARY

A technical object to achieve in the present disclosure is to provide a separator for an electrochemical device which is capable of improving electrolyte impregnation without reducing mechanical strength.

Additionally, another technical object to achieve in the present disclosure is to provide an electrochemical device including the separator described above.

The objects to be solved by the present disclosure are not limited to those mentioned above, and other objects not mentioned will be clearly understood by those skilled in the art from the description below.

The above problems are solved in accordance with the subject-matter of the independent claims. Further embodiments result from the sub-claims and the following written description.

### ADVANTAGEOUS EFFECTS

According to embodiments of the present disclosure, it is possible to implement a separator for an electrochemical device, which includes a resin mixture provided with an ethylene vinyl acetate copolymer containing a specific content of a highly polar vinyl acetate group thereby having improved electrolyte impregnation without reducing mechanical strength.

Further, since the separator for an electrochemical device contains an ethylene vinyl acetate copolymer having a relatively low melting point, it has a lowered shut-down temperature of the separator, thus having an effect of improving the stability of the electrochemical device.

### DETAILED DESCRIPTION

Hereinafter, embodiments of the present disclosure will be described in detail.

Embodiments of the present disclosure to be described below are provided to more clearly explain the present disclosure to those skilled in the art, and the scope of the present disclosure is not limited by the following embodiments, and the following embodiments may be modified in various forms.

The terms used in this specification are used to describe specific embodiments and are not intended to limit the present disclosure. The terms in a singular form used herein may include plural forms unless the context clearly indicates otherwise. Additionally, as used herein, the terms "comprise" and/or "comprising" specify the presence of a referenced shape, step, number, action, member, element and/or group thereof, and it does not exclude the presence or addition of one or more other shapes, steps, numbers, actions, members, elements and/or groups thereof. Additionally, the term "connection" used herein means not only direct connection of certain members, but also a concept including indirect connection by other members interposed between the members.

In addition, in the present specification, when a member is described to be located "on" another member, this includes not only a case where a member is in contact with another member, but also a case where another member exists between two members. As used herein, the term "and/or" includes any one and all combinations of one or more of the listed items. In addition, terms to such extent as "about" and "substantially" used in this specification are used in a range of values or degrees or meanings close thereto, considering inherent manufacturing and material tolerances, and are used to prevent undue exploitation by infringers of the disclosure, in which exact or absolute figures provided so as to aid in the understanding of the present disclosure.

According to an aspect the present disclosure provides a separator for an electrochemical device comprising a resin mixture containing ethylene vinyl acetate copolymer (EVA) and polyethylene (PE), wherein the ethylene vinyl acetate copolymer (EVA) contains 20 wt.% or less of vinyl acetate (VA) based on the total amount of the ethylene vinyl acetate copolymer (EVA), characterized in that the content of the ethylene vinyl acetate copolymer in the resin mixture is from 5 wt.% to 30 wt.-% based on the total amount of the resin mixture. In other words, the disclosure provides, a separator for an electrochemical device, which includes a resin mixture in which an ethylene vinyl acetate copolymer (EVA) and polyethylene (PE) are mixed, wherein the content of vinyl acetate (VA) in the ethylene vinyl acetate copolymer is 20 wt.% or less based on the total amount of ethylene vinyl acetate copolymer (EVA).

A conventional wet separator, which has been mainly used, consists of polyethylene that consists of only carbon (C) and hydrogen (H) atoms, but the separator of the present disclosure contains an ethylene vinyl acetate copolymer. Since vinyl acetate has a higher polarity than polyethylene, it has an advantage in that it has excellent affinity for polar electrolyte. As a result, the separator of the present disclosure has the effect of further improving electrolyte impregnation.

However, when the content of vinyl acetate in ethylene vinyl acetate copolymer exceeds 20 wt.%, the crystallinity of polyethylene is lowered, and thus the mechanical strength of the separator may be lowered. Therefore, the content of the vinyl acetate in the ethylene vinyl acetate copolymer should satisfy 20 wt.% or less. Preferably, the content of vinyl acetate in the ethylene vinyl acetate copolymer is in a range between 20 wt.% and above 0 wt.%, more preferably in a range between 20 wt.% and 1 wt.%, based on the total amount of the ethylene vinyl acetate copolymer (EVA). Hence, the ethylene vinyl acetate copolymer (EVA) contains 20 wt.% or less, preferably 1 to 20 wt.%, more preferably 3 to 18 wt.%, still more preferably 5 to 15 wt.%, even more preferably 7 to 12 wt.%, especially more preferably 9 to 11 wt.%, most preferably 10 wt.%, or in an alternative preferred embodiment 10 to 20 wt.%, of vinyl acetate (VA) based on the total amount of the ethylene vinyl acetate copolymer (EVA).

As a result, the separator of the present disclosure having the preferred content of vinyl acetate in the ethylene vinyl acetate copolymer (EVA) has the effect of further improving electrolyte impregnation while a high mechanical strength can be maintained.

The ethylene vinyl acetate copolymer (EVA) contains 80 to 99 wt.%, preferably 82 to 97 wt.%, more preferably 85 to 95 wt.%, even more preferably 88 to 93 wt.%, especially more preferably 89 to 91 wt.%, or in an alternative preferred embodiment 80 to 90 wt.%, of ethylene (C2) based on the total amount of the ethylene vinyl acetate copolymer (EVA). An ethylene vinyl acetate copolymer (EVA) containing the preferred amount of ethylene, like polyethylene, as it is indicated above, may provide a separator for an electrochemical device which is capable of improving electrolyte impregnation without reducing mechanical strength.

The ethylene vinyl acetate copolymer (EVA) contains ethylene (C2) and vinyl acetate (VA) and the ratio of ethylene (C2) to vinyl acetate (VA) is in a range of 3.5 to 20, preferably 3.6 to 18, more preferably 3.7 to 15, even more preferably 3.8 to 12, especially more preferably 5 to 11, most preferably 8 to 10. An ethylene vinyl acetate copolymer (EVA) fulfilling the above ratio of ethylene (C2) and vinyl acetate (VA) may has the surprising effect that a separator for an electrochemical device which is capable of improving electrolyte impregnation without reducing mechanical strength can be provided.

Furthermore, the resin mixture contains 0.1 to 3.0 wt.%, preferably 0.1 to 2.5 wt.%, more preferably 0.2 to below 2.5 wt.%, even more preferably 0.3 to 2.3 wt.%, especially more preferably 0.3 to 2.0 wt.%, even especially more preferably 0.4 to 1.8 wt.%, most preferably 1.0 to 1.5 wt.%, of vinyl acetate based on the total weight of the resin mixture. In a special embodiment of the present invention, the resin mixture does not contain 2.5 wt.% of vinyl acetate based on the total weight of the resin mixture. A resin mixture containing the preferred amount of vinyl acetate as it is indicated above, has the technical effect that the puncture strength may be increased, while the electrolyte impregnation is also improved. Thus, the mechanical strength and electrolyte impregnation of the separator can be improved.

Additionally, the resin mixture contains 97.0 to 99.9 wt.%, preferably 97.5 to 99.9 wt.%, more preferably 97.7 to 99.8 wt.%, even more preferably 98 to 99.7 wt.%, especially more preferably 98.2 to 99.6 wt.%, most preferably 98.5 to 99.0 wt.%, of ethylene based on the total weight of the resin mixture. A resin mixture containing the preferred amount of ethylene, like polyethylene, as it is indicated above, may provide a separator for an electrochemical device which is capable of improving electrolyte impregnation without reducing mechanical strength.

As it is known by the person skilled in the art, the content of the resin mixture, preferably the amount of ethylene, vinyl acetate, and ethylene vinyl acetate copolymer based on the resin mixture may be measured by quantitative IR as it is described by H. Hagemann, R. G. Snyder, A. J. Peacock, and L. Mandelkern: "Quantitative Infrared Methods for the Measurement of Crystallinity and Its Temperature Dependence: Polyethylene" in Macromolecules, 1989, 22 (9), pages 3600-3606 (DOI: 10.1021/ma00199a017). Alternatively, as it is known by the person skilled in the art, the content of resin mixture, preferably the amount of ethylene, vinyl acetate, and ethylene vinyl acetate copolymer based on the resin mixture may be measured by quantitative C-NMR spectroscopy as it has been described by Douglas A. L. Otte, Dorothee E. Borchmann, Chin Lin, Marcus Weck, and K. A. Woerpel: "13C NMR Spectroscopy for the Quantitative Determination of Compound Ratios and Polymer End Groups" in Organic Letters, 2014, 16 (6), pages 1566-1569 (DOI: 10.1021/ol403776k).

Further, when an ethylene vinyl acetate copolymer with a relatively low melting point is contained, the shut-down temperature of the separator can be lowered, and through this, an additional effect of improving the safety of an electrochemical device can be exerted.

In particular, the content of the ethylene vinyl acetate copolymer in the resin mixture is 30 wt.% or less and 5 wt.% or more, preferably in a range between 20 wt.% and 5 wt.%, especially more preferably in a range between 5 wt.% and 15 wt.%, even especially more preferably in a range between 5 wt.% and 10 wt.%, alternatively in a range between 10 wt.% and 15 wt.%. When the content of the ethylene vinyl acetate copolymer exceeds the above value, it reduces the compatibility with polyethylene thus making it difficult to implement the separator with uniform physical properties. Further, even after preparation of the separator, the mechanical strength of the separator may decrease due to the deterioration of the crystallinity of polyethylene. On the other hand, when the content of the ethylene vinyl acetate copolymer is below the above value the electrolyte impregnation may not be sufficiently improved without reducing the mechanical strength.

The weight average molecular weight (Mw) of the ethylene vinyl acetate copolymer (EVA) is 320 000 g/ mol or less, preferably in the range of 100 000 to 320 000 g/ mol, more preferably in the range of 200 000 to 315 000 g/ mol, even more preferably in the range of 250 000 to 312 000 g/ mol, most preferably in the range of 280 000 to 310 000 g/ mol. In a special embodiment of the present invention, the weight average molecular weight (MW) of the ethylene vinyl acetate copolymer (EVA) may not be 307 000 g/ mol in addition to the preferred ranges above. If the weight average molecular weight (MW) of the ethylene vinyl acetate copolymer (EVA) is above or below the preferred range, the mechanical properties, like puncture strength, of the separator may not be obtained or, a properly mixed mixture of EVA and PE cannot be obtained. In conclusion, the separator fulfilling the preferred ranges of the weight average molecular weight (Mw) of the ethylene vinyl acetate copolymer (EVA) provides a separator having improved electrolyte impregnation without reducing mechanical strength. The weight average molecular weight may be measured by gel permeation chromatography. A device such as GPC, PL GPC220 by Agilent Technologies may be used for gel permeation chromatography.

Thus, the weight average molecular weight can be measured using a high temperature RI detector provided by the Agilent High Temperature RI detector under the conditions of a PL Olexis (Polymer Laboratories) column with a column temperature of 160 °C and with TCB (trichlorobenzene) as a solvent. The sample may be prepared by having a sample concentration of 1.0 mg/mL, a flow rate of 1.0 mL/min, and an injection volume of 200 uL (Correction with cubic function, standard: polystyrene).

Moreover, the melting point (Tm) of the ethylene vinyl acetate copolymer may be 80°C to 130°C, specifically 80°C to 120°C, and more specifically 90°C to 110°C. The melting point (Tm) may be measured by differential scanning calorimetry (DSC) by the use of a DSC instrument, like DSC 2920 by TA Instruments. When the melting point (Tm) of the ethylene vinyl acetate copolymer is lower than the above numerical range, a problem may occur in which the heat resistance of the separator may be excessively reduced, whereas when the melting point is higher than the above numerical range, the effect of improving electrolyte impregnation of the separator may be insignificant.

Additionally, the resin mixture may have a degree of crystallinity of 20% to 50%, specifically 20% to 45%, and more specifically 30% to 40%. When the degree of crystallinity of the resin mixture is lower than the above numerical range, the content of the non-crystalline region of the separator may increase thus deteriorating mechanical properties of the resin mixture, whereas when the degree of crystallinity of the resin mixture is higher than the above numerical range, the effect of improving electrolyte impregnation may be insignificant, thus not being desirable.

The degree of crystallinity can be expressed as percentage (%) by dividing the melting enthalpy (ΔH) value actually measured in differential scanning calorimetry (DSC) measurement by the melting enthalpy (ΔH) value of a theoretically perfect crystal (degree of crystallinity 100%). In particular, the melting enthalpy value of a theoretical perfect crystal can be found in the polymer handbook for known polymers, and for unknown materials or newly synthesized materials, the value can be calculated by extrapolation by extending the degree of crystallinity by two or more points.

Additionally, although the thickness of the separator for an electrochemical device is not particularly limited, it may be from 1 µm to 100 µm, specifically from 3 µm to 50 µm, and more specifically from 5 µm to 15 µm. When the thickness of the separator is less than the above numerical range, the mechanical properties of the separator may be deteriorated, whereas when the thickness of the separator exceeds the numerical range, the resistance of the separator itself may increase excessively and may be disadvantageous in realizing the energy density of an electrochemical device, thus not being desirable.

Further, although the porosity and the average pore diameter of the separator for an electrochemical device are also not particularly limited, each may be from 20 vol.% to 70 vol.% and 0.01 µm to 1 µm, specifically each from 30 vol.% to 60 vol.% and from 0.02 µm to 0.1 µm, and more specifically each from 40 vol.% to 50 vol.% and from 0.03 µm to 0.05 µm.

In the present disclosure, the porosity means the ratio of the volume occupied by pores to the total volume in a structure, and vol.% can be used as its unit. In the present disclosure, the measurement of the porosity is not particularly limited, it may be measured according to an embodiment of the present disclosure, for example, according to a Brunauer-Emmett-Teller (BET) measurement method using nitrogen gas or a mercury porosimeter and ASTM D-2873. Alternatively, the porosity of the separator may be calculated from the difference between the density of the separator (apparent density) and the net density of the separator after measuring the apparent density of the separator and the net density of the separator from the composition ratio of the materials included in the separator and the densities from each of the components. Moreover, in the present disclosure, the pore size, pore distribution, and average diameter of pores (nm) can be measured using a capillary flow porometer. This is based on a method of wetting the pores of the separator using a liquid of known surface tension, and then measuring the pressure (bubble point = max pore) at which the initial flow rate occurs by applying air pressure thereto.

A specific example of such capillary flow porometer is CFP-1500-AE of Porous Materials, *etc.* Therein, the pore size may be calculated from a pore size distribution measured using a capillary flow porometer method. The relationship between air pressure and flow rate may be measured using the porometer for each of the porous substrate in a dry state (dry sample) and the porous substrate in a wet state (wet sample), and the ventilation curve of the dry sample (dry curve) and the ventilation curve (wet curve) of the wet sample, from which the size and distribution of pores can be confirmed. The method may use a wetting solution having a low surface tension to wet the porous substrate, and then may pressurize it using a gas to push the wetting solution filling the pores of the porous substrate to measure the pore size. For example, after the porous substrate to be measured is wetted with a wetting solution (Galwick solution), the air pressure on one side of the porous substrate may be gradually increased. At this time, when the applied air pressure may be greater than the capillary attraction of the wetting fluid present in the pores, the wetting fluid blocking the pores may be pushed out, and the pore size and distribution can be measured through the pressure and flow rate at the moment of being pushed out.

Moreover, the puncture strength of the separator for an electrochemical device in the present disclosure may be 160 gf or higher, preferably of 180 gf or higher, more preferably of 200 gf or higher, even more preferably of 210 gf or higher, especially more preferably of 220 gf or higher, but not higher than 500 gf, preferably not higher than 400 gf, more preferably not higher than 350 gf, even more preferably not higher than 300 gf, like in a range of 160 to 500 gf. Moreover, the separator may have a standard deviation of puncture strength of 8.0 or less, preferably 7.5 or less, more preferably 7.0 or less, even more preferably 6.7 or less, especially more preferably 6.5 or less, but not lower than 1, like in a range of 1 to 8.0. Thus, a separator with sufficient mechanical strength can be provided.

In the present disclosure, the puncture strength means the resistance of a separator to a danger from the outside (*e.g.,* the penetration of an external object). As its unit, gf or kgf is used, and it can be used interchangeably with penetration strength, puncture strength, *etc.* Conventionally, as this value becomes greater, the internal short-circuit defect rate of the separator becomes lower. In this penetration test, for example, a needle or injection needle having a predetermined diameter is vertically penetrated through the separator at a predetermined speed, and the force applied at this time is measured.

According to the present disclosure, since the content of vinyl acetate in the ethylene vinyl acetate copolymer included in the separator is less than 20 wt.%, there is an advantage in that impregnation into electrolyte is improved without reducing mechanical strength, compared to conventional separators.

Additionally, the separator for an electrochemical device according to the present disclosure may have a shut-down temperature of 100°C to 145°C, specifically 110°C to 140°C, and more specifically 110°C to 130°C. When the shut-down temperature is within the above numerical range, the safety of an electrochemical device can be maintained even under a high-temperature environment (*e.g*., thermal runaway) due to a short-circuit.

In the present disclosure, the shut-down temperature means the temperature at which the micropores in a separator are closed due to a sudden large current flow resulting from an internal or external short-circuit. The shut-down temperature of the present disclosure can be measured according to the following method. First, while measuring the air permeability of a separator, the separator is exposed to an elevated temperature condition (starting at 30°C and at 5°C/min). In particular, the temperature at which the permeability (Gurley value) of the separator exceeds 100,000 sec/100 cc for the first time is defined as the shut-down temperature. The air permeability of the separator may be measured using an air permeability meter (Asahi Seiko, EGO-IT) according to JIS P8117.

Moreover, the electrolyte impregnation of the separator may be confirmed through the contact area of the propylene carbonate droplet (PC drop) on the separator. Hence, the separator for an electrochemical device has a PC drop area of higher than 8 mm, preferably in a range between 8 and 30 mm, more preferably in a range between 9 and 23 mm, even more preferably in a range between 10 and 19 mm, especially more preferably in a range between 11 and 18 mm, even especially more preferably in a range between 11.5 and 16.5 mm, most preferably in a range between 12.0 and 16.0 mm. More specifically, the electrolyte impregnation may be confirmed as follows (measurement method of the PC drop area): appropriately cutting the separator such that the horizontal length is 1 cm and the vertical length is 4 cm, adding about 2 µL of a propylene carbonate solution dropwise on the surface of the separator, and after a certain period of time (about 5 minutes), confirming using the drop shape analysis system (KRUSS, DSA100).

It is preferable that the separator for an electrochemical device according to the present disclosure is preferably wet separator prepared by a wet preparation method. For example, the wet preparation method includes the following steps: (S1) preparing a mixture, (S2) extruding the mixture and forming an extruded sheet, (S3) stretching the extruded sheet, (S4) removing a porogen, and (S5) heat-setting of the extruded sheet.

In the step (S1), the type of polymer resin is appropriately selected according to the final physical properties of the separator, and the thus-selected polymer resin is mixed with the porogen. The polymeric resin of the present disclosure contains a resin mixture in which an ethylene vinyl acetate copolymer (EVA) and polyethylene (PE) are mixed, wherein the content of vinyl acetate (VA) in the ethylene vinyl acetate copolymer is 20 wt.% or less, as it is further described above.

The porogen is a material dispersed in a polymer resin, exhibits heterogeneity of a separator prepared by undergoing extrusion, stretching, *etc.,* and is subsequently removed from the separator. Therefore, the portion where the porogen was located in the separator remains in the form of pores of the separator. The porogen is preferably a liquid material in the extrusion process, but a material that maintains a solid state may be used. The porogen may be an aliphatic hydrocarbon-based solvent (*e.g*., liquid paraffin, paraffin oil, mineral oil, paraffin wax, *etc.*); vegetable oils (*e.g.,* soybean oil, sunflower oil, rapeseed oil, palm oil, coconut oil, corn oil, grapeseed oil, cottonseed oil, etc.); or a plasticizer (*e.g*., dialkyl phthalate, *etc.*)*.* In particular, the plasticizer may be di-2-ethylhexyl phthalate (DOP), di-butyl-phthalate (DBP), di-isononyl phthalate (DINP), di-isodecyl phthalate (DIDP), butyl benzyl phthalate (BBP), *etc.* Among these, it is particularly preferable to use liquid paraffin (LP).

Additionally, when preparing the separator, the content of a porogen may be appropriately adjusted to achieve a desired level of porosity. Considering the aspect of improving the air permeability, it is preferable to have a high porogen content, but when a porogen is contained in an excessive amount, it may adversely affect the strength of the finally produced separator. Therefore, the porogen content may be from 1 wt.% to 80 wt.% based on 100 wt.% of the total of the polymer resin and the porogen, and if necessary, the porogen content may be adjusted, within the above range, to 70 wt.% or less, 60 wt.% or less, or 50 wt.% or less, and may be adjusted to 1 wt.% or more, 20 wt.% or more, or 40 wt.% or more.

Then, an extruded sheet is formed by extruding the prepared mixture using an extruder. The extruder is not particularly limited, and may be an extruder commonly used in the art, such as, but not limited to, an extruder to which a T-die or circular tubular die is attached. The extrusion process may be performed at a normal extrusion temperature, but it is preferably performed under a temperature condition, which is higher than the melting point of the polymer resin used by 10°C to 100°C. When the extrusion process exceeds the above range, the polymer resin is thermally degraded thus making it difficult to form a film, and the physical properties of the prepared separator are deteriorated thus being undesirable. An extruded sheet may be formed through such extrusion process.

Then, the extruded sheet is stretched. This stretching process may be performed through a stretching machine commonly used in the art. As the stretching machine, a successive biaxial stretching machine, *etc.* may be used, but the stretching machine to be used is not particularly limited thereto. In this way, the mechanical strength of the separator can be increased by stretching the extruded sheet. The stretching process is performed in the machine direction (MD, longitudinal direction) and/or transverse direction (TD, vertical direction). By the stretching, cleavage occurs between the lamellae of the resin mixture to form a plurality of fibrils, and these fibrils are irregularly connected in three dimensions to thereby form a very fine network structure. Additionally, stretching in all or one of these directions increases the tensile strength in the stretching direction. If necessary, in the separator of the present disclosure, the stretching process may be performed such that the machine direction (MD) and/or transverse direction (TD) stretching is performed alone (*e.g*., uniaxial stretching), simultaneously or sequentially (*e.g*., biaxial stretching). Moreover, according to an embodiment of the present disclosure, the stretching may be controlled at a sheet temperature of 100°C to 130°C, preferably 110°C to 125°C.

Then, the porogen is removed from the sheet obtained above. The porogen can be removed by extraction using a solvent followed by drying. Additionally, through this removal, the space occupied by the porogen may be formed as pores. Any solvent that can extract a porogen may be used as a solvent for extraction of a porogen; however, methyl ethyl ketone, methylene chloride, hexane, *etc.,* which have high extraction efficiency and enable quick drying, are suitable. Preferably, the solvent may be methylene chloride, such as methylene dichloride (MC). As the extraction method, all common solvent extraction methods such as an immersion method, a solvent spray method, and an ultrasonic method may be used alone or in combination.

Subsequently, a step of heat-setting the extruded sheet obtained above is performed, thereby finally obtaining a separator having desired physical properties, porosity, and air permeability. The heat-setting step may be performed using a heating device capable of applying an appropriate temperature required for heat-setting (*e.g*., an oven). In particular, the sheet dried in advance undergoes heat-setting so as to reduce the shrinkage rate of the final sheet by removing residual stress. The heat-setting is to remove residual stress by forcibly holding the sheet to be shrunk by fixing the sheet and applying heat. A high heat-setting temperature is advantageous for lowering the shrinkage rate, but when the temperature is too high, the sheet may be partially melted and thus formed pores may be blocked, thereby reducing transmittance. The heat setting temperature is preferably selected from a temperature range at which approximately 10 wt.% to 30 wt.% of the crystalline portion of the sheet is melted. When the temperature of the heat-setting is selected to be lower than the temperature at which about 10 wt.% of the crystalline portion of the sheet is melted, it does not provide the effect of removing the residual stress in the sheet due to insufficient reorientation of the molecules of the polymer resin in the sheet, whereas when the temperature is selected to be higher than the temperature at which about 30 wt.% of the crystalline portion of the sheet is melted, it may result in blocking of pores due to partial melting, thereby reducing permeability.

A further aspect of the present invention is a coated separator for an electrochemical device, wherein the separator of the present disclosure is coated on one or both sides with a porous coating layer, wherein the porous coating layer comprises inorganic particles and a binder polymer.

In other words, the separator for an electrochemical device according to the present disclosure may further include a porous coating layer formed on one or both sides of the separator, and the porous coating layer may include inorganic particles and a binder polymer, to obtain a coated separator.

The porous coating layer has a plurality of micropores inside and has a structure in which these micropores are connected, and it may have a structural feature of a porous layer made to allow gas or liquid to pass from one side to the other side. According to an embodiment of the present disclosure, the binder polymer and inorganic particles may be included in the porous coating layer in a weight ratio of 1:99 to 30:70. The ratio may be appropriately adjusted within the above range, for example, among the total amount of 100 wt.% of the binder polymer and inorganic particles, the binder polymer content may be 1 wt.% or more, 5 wt.% or more, or 10 wt.% or more, and the inorganic particles content may be 80 wt.% or more, 85 wt.% or more, 90 wt.% or more, or 95 wt.% or more. In the present disclosure, it is preferable that the coating layer has a porous structure from the viewpoint of ion permeability.

The porous coating layer may be formed by combining inorganic particles mediated by a binder polymer, and pores may be formed by an interstitial volume between the inorganic particles. The interstitial volume may be a space defined by inorganic particles substantially interviewed in a closed packed or densely packed structure of inorganic particles.

In an embodiment of the present disclosure, the porosity of the porous coating layer may be 30 vol.% to 70 vol.%, and within the above range, the porosity may be 35 vol.% or more or 40 vol.% or more, and simultaneously with the same or independently of each other, the porosity may be 65 vol.% or less or 60 vol.% or less. For example, the porosity may be in the range of 40 vol.% to 60 vol.%. When the porosity is 70 vol.% or less, it is possible to secure mechanical properties that can withstand the pressing process of bonding the electrodes; additionally, since the surface aperture ratio does not become too high, it is suitable for securing adhesive strength. Moreover, when the porosity is 30 vol.% or more, it is advantageous from the viewpoint of ion permeability.

The thickness of the porous coating layer may be from 1 µm to 6 µm on one side of the separator. The thickness of the porous coating layer may be 2 µm or more or 3 µm or more as needed within the above range. The adhesion to the electrodes may be excellent within the above numerical range, and as a result, the cell strength of an electrochemical device may be increased. Moreover, when the thickness is 6 µm or less, it is advantageous in terms of cycle characteristics and resistance characteristics of an electrochemical device.

In particular, non-limiting examples of the polymer resin usable for the porous coating layer may be one or a mixture of two or more selected from the group consisting of polyvinylidene fluoride-co-hexafluoropropylene, polyvinylidene fluoride-co-trichloroethylene, polymethylmethacrylate, polybutylacrylate, polyacrylonitrile, polyvinylpyrrolidone, polyvinyl acetate, polyethylene-co-vinyl acetate, polyethylene oxide, polyarylate, cyanoethylpullulan, cyanoethylpolyvinylalcohol, cyanoethylcellulose, cyanoethylsucrose, pullulan, and carboxyl methyl cellulose.

Additionally, the inorganic particles that can be used for the porous coating layer are not particularly limited as long as they are electrochemically stable. That is, the inorganic particles that can be used in the present disclosure are not particularly limited as long as oxidation and/or reduction reactions do not occur in the operating voltage range (*e.g.,* 0 V to 5 V based on Li/Li+) of an electrochemical device to which they are applied.

Non-limiting examples of the inorganic particles may include BaTiO₃, Pb(Zr, Ti)O₃ (PZT), Pb₁₋ₓLaₓZf_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂Oₛ, SiC, Al(OH)₃, TiO₂, aluminum peroxide, zinc-tin hydroxide (ZnSn(OH)₆), tin-zinc oxide (Zn₂SnO₄, ZnSnO₃), antimony trioxide (Sb₂O₃), antimony tetroxide (Sb₂O₄), antimony pentoxide (Sb₂O₅), *etc.,* and may include one or two or more among them.

Independently of this or together with the components exemplified above, the inorganic particles may include inorganic particles having lithium ion transport capability. Non-limiting examples of inorganic particles having such lithium ion transport ability include (LiAlTiP)ₓO_{y}-based glass (0<x<4, 0<y<13) (*e.g*., lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), 14Li₂O-9Al₂O₃-38TiO₂-39P₂O₅, *etc.*); lithium germanium thiophosphate (LiₓGe_{y}P_{z}S_{w}, 0<x<4, 0<y<1, 0<z<1, 0<w<5) (*e.g*., lithium lanthanum titanate (LiₓLa_{y}TiO₃, 0<x<2, 0<y<3), Li_{3.25}Ge_{0.25}P_{0.75}S₄, *etc*.)*;* lithium nitride (LiₓN_{y}, 0<x<4, 0<y<2) (*e.g.,* Li₃N, *etc.);* SiS₂-based glass (LiₓSi_{y}S_{z}, 0<x<3, 0<x<2, 0<z<4) (*e.g.,* Li₃PO₄-Li₂S-SiS₂, *etc.*); P₂S₅-based glass (LiₓP_{y}S_{z}, 0<x<3, 0<y<3, 0<z<7) (*e.g.,* LiI-Li₂S-P₂S₅, *etc.*); a mixture thereof, *etc.*

Additionally, the average diameter (D₅₀) of inorganic particles is not particularly limited, but it is preferably in the range of 0.3 µm to 1.0 µm in order to form a porous coating layer with a uniform thickness and an appropriate porosity. When it is less than 0.3 µm, the dispersibility of inorganic particles in the slurry prepared for the preparation of the porous coating layer may be reduced, when the thickness exceeds 1.0 µm, the thickness of the porous coating layer formed may increase.

In an aspect of the present disclosure, the method of forming the porous coating layer is as follows. First, a polymer solution is prepared by dissolving a binder polymer in an appropriate organic solvent. As the solvent, it is preferable that the solubility index be similar to that of the binder polymer to be used and the boiling point be low. This is to facilitate uniform mixing and subsequent removal of the solvent. Non-limiting examples of solvents that can be used include acetone, tetrahydrofuran, methylene chloride, chloroform, dimethylformamide, N-methyl-2-pyrrolidone (NMP), cyclohexane, water, or a mixture thereof, *etc.*

Then, inorganic particles are added and dispersed in the prepared polymer solution. In the present disclosure, the content ratio of the inorganic particles and the polymer binder is as described above and can be appropriately adjusted in consideration of the thickness of the porous coating layer, pore size, and porosity of the present disclosure to be finally prepared.

Subsequently, the inorganic particle slurry prepared above is applied to at least one surface of the separator and dried. The method of coating the slurry on the separator is not particularly limited, and a conventional coating method known in the art may be used. For example, various methods such as dip coating, die coating, roll coating, comma coating, or a combination of these methods may be used.

In the drying process, temperature and time conditions may be appropriately set so as to minimize defects on the surface of the porous coating layer. In the drying process, an auxiliary drying device (*e.g.,* a drying oven, hot air, *etc.*) may be used.

Moreover, the electrochemical device according to another aspect of the present disclosure includes a positive electrode, a negative electrode, and a separator interposed between the positive electrode and the negative electrode, wherein the separator is the aforementioned separator for an electrochemical device according to the present disclosure.

In the present disclosure, the positive electrode is provided with a positive electrode collector and a positive electrode active material layer, which includes a positive electrode active material, a conductive material, and a polymer binder on at least one surface of the collector. The positive electrode active material may include one or a mixture of two or more among a layered compound (*e.g.,* lithium manganese composite oxide (LiMn₂O₄, LiMnO₄, *etc.),* lithium cobalt oxide (LiCoO₂), lithium nickel oxide (LiNiO₂), *etc.*) or a compound substituted with one or more transition metals; lithium manganese oxide (*e.g*., Chemical Formula Li₁₊ₓMn₂₋ₓO₄ (wherein x is 0 to 0.33), LiMnO₃, LiMn₂O₃, LiMnO₂, *etc.);* lithium copper oxide (*e.g.,* Li₂CuO₂); vanadium oxide (*e.g.,* LiV₃O₈, LiV₃O₄, V₂O₅, Cu₂V₂O₇, *etc.*); Ni site-type lithium nickel oxide represented by Chemical Formula LiNi₁₋ₓMₓO₂ (wherein M is Co, Mn, Al, Cu, Fe, Mg, B, or Ga, and x is 0.01 to 0.3); lithium manganese composite oxide represented by Chemical Formula LiMn₁₋ₓMₓO₂ (wherein M is Co, Ni, Fe, Cr, Zn, or Ta, and x is 0.01 to 0.1) or Li₂Mn₃MO₈ (wherein M is Fe, Co, Ni, Cu, or Zn); LiMn₂O₄ in which the Li part of the Chemical Formula is replaced with alkaline earth metal ions; and Fe₂(MoO₄)₃.

In the present disclosure, the negative electrode is provided with a negative electrode collector and a negative electrode active material layer, which includes a negative electrode active material, a conductive material, and a polymer binder on at least one surface of the collector. The negative electrode may include, as a negative electrode active material, one or a mixture of two or more from among carbon such as non-graphitizing carbon and graphite-based carbon (*e.g.,* non-graphitizing carbon, graphite-based carbon, *etc.*); silicon-based materials (*e.g.,* LiₓFe₂O₃ (0≤x≤1), LiₓWO₂ (0≤x≤1), Si, SiOₓ (0<x<2), SiC, Si alloys, *etc.*); metal composite oxides (*e.g*., SnₓMe₁₋ₓMe'_{y}O_{z} (Me: Mn, Fe, Pb, Ge; Me': Al, B, P, Si, elements in Groups I, II, and III of the periodic table, halogens; 0<x≤1; 1≤y≤3; 1≤z≤8), *etc.*); lithium metals; lithium alloys; tin-based alloys; metal oxides (*e.g.,* SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, *etc.*)*;* conductive polymers (*e.g.,* polyacetylene, *etc.*); Li-Co-Ni based materials; and titanium oxides.

In the present disclosure, the collector is not particularly limited as long as it has high conductivity without causing chemical changes in the electrochemical device, and for example, stainless steel, copper, aluminum, nickel, titanium, calcined carbon, or aluminum, or stainless steel whose surface is treated with carbon, nickel, titanium, silver, *etc.* may be used.

In the present disclosure, the conductive material may be any one or a mixture of two or more kinds of conductive materials selected from the group consisting of graphite, carbon black, carbon fibers or metal fibers, metal powders, conductive whiskers, conductive metal oxides, carbon nanotubes, activated carbon, and polyphenylene derivatives. In the carbon nanotube, the graphite sheet has a cylindrical shape with a nano-sized diameter and an sp² bonding structure, and exhibits the characteristics of a conductor or semiconductor depending on the angle and structure at which the graphite plane is rolled.

Carbon nanotubes can be classified into single-walled carbon nanotubes (SWCNTs), double-walled carbon nanotubes (DWCNTs), and multi-walled carbon nanotubes (MWCNTs), depending on the number of bonds facing the walls, and these carbon nanotubes can be appropriately selected depending on the use of the dispersion. More specifically, carbon nanotubes may be a mixture of one or two or more kinds of conductive materials selected from the group consisting of natural graphite, artificial graphite, super-p, acetylene black, ketjen black, channel black, furnace black, lamp black, summer black, denka black, aluminum powder, nickel powder, zinc oxide, potassium titanate, and titanium oxide.

In the present disclosure, as the polymer binder, a polymer binder commonly used in electrodes in the art may be used. Non-limiting examples of such polymeric binders may include polyvinylidene fluoride-co-hexafluoropropylene, polyvinylidene fluoride-cotrichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetatepropionate, cyanoethylpullulan, cyanoethylpolyvinylalcohol, cyanoethylcellulose, cyanoethylsucrose, pullulan, carboxyl methyl cellulose, *etc.,* but are not limited thereto.

The electrode assembly according to the present disclosure includes a positive electrode, a negative electrode, and a separator interposed between the positive electrode and the negative electrode, and an electrochemical device may be prepared by loading the electrode assembly into an appropriate case and injecting an electrolyte.

In the present disclosure, the electrolyte is a salt having a structure of A⁺B⁻, in which A⁺ includes an alkali metal cation (*e.g.,* Li⁺, Na⁺, and K⁺) or an ion composed of a combination thereof, B⁻ is an anion (*e.g.,* PF₆⁻, BF₄⁻, Cl⁻, Br⁻, I⁻, ClO₄⁻, AsF₆⁻, CH₃CO₂⁻, which is dissolved or dissociated in propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma (γ) butyrolactone or an organic solvent consisting of a mixture thereof, but it not limited thereto.

Additionally, the present disclosure provides a battery module which includes a battery including the electrode assembly as a unit cell, a battery pack including the battery module, and a device including the battery pack as a power source. Specific examples of the device may include a power tool powered by an electric motor; electric vehicles (EVs) including electric vehicles (EVs), hybrid electric vehicles (HEVs), plug-in hybrid electric vehicles (PHEVs), *etc.;* electric two-wheeled vehicles including electric bicycles (E-bikes) and electric scooters (E-scooters); electric golf carts; power storage systems, *etc.,* but is not limited thereto.

Hereinafter, an embodiment will be described in detail to explain the present disclosure in detail. However, embodiments according to the present disclosure may be modified in various forms, and the scope of the present disclosure should not be construed as being limited to the embodiments detailed below. Embodiments of the present disclosure are provided to more completely explain the present disclosure to those with average knowledge in the art.

### 1. Preparation of separator

### (1) Example 1

Based on 100 wt.% of a resin mixture, 95 wt.% of polyethylene (Mw 374,000 g/mol, PDI 4.25) and 5 wt.% of an ethylene vinyl acetate copolymer (Mw 310,000 g/mol, PDI 2.3) having 10 wt.% of a vinyl acetate content were mixed to prepare a resin mixture.

30 parts by weight of the prepared resin mixture and 70 parts by weight of liquid paraffin oil (kinetic viscosity at 40°C: 40 cSt) were put into a twin screw extruder, kneaded, and then extruded. After extrusion, the resultant was molded into a sheet form by subjecting it to a T-die and a cooling casting roll, and then, after MD stretching, it was biaxially stretched with a tenter-type successive stretching machine of TD stretching. Liquid paraffin oil, which is a diluent, was extracted from the stretched sheet with methylene chloride, and heat-set at about 128°C to prepare a separator.

### (2) Example 2

A separator was prepared in the same manner as in Example 1, except that a mixture, in which 90 wt.% of polyethylene (Mw 374,000 g/mol, PDI 4.25) and 10 wt.% of an ethylene vinyl acetate copolymer (Mw 310,000 g/mol, PDI 2.3) having 10 wt.% of a vinyl acetate content were mixed, was used as a resin mixture.

### (3) Example 3

A separator was prepared in the same manner as in Example 1, except that a mixture, in which 85 wt.% of polyethylene (Mw 374,000 g/mol, PDI 4.25) and 15 wt.% of an ethylene vinyl acetate copolymer (Mw 310,000 g/mol, PDI 2.3) having 10 wt.% of a vinyl acetate content were mixed, was used as a resin mixture.

### (4) Example 4

A separator was prepared in the same manner as in Example 1, except that a mixture, in which 80 wt.% of polyethylene (Mw 374,000 g/mol, PDI 4.25) and 20 wt.% of an ethylene vinyl acetate copolymer (Mw 310,000 g/mol, PDI 2.3) having 10 wt.% of a vinyl acetate content were mixed, was used as a resin mixture.

### (5) Example 5

A separator was prepared in the same manner as in Example 1, except that a mixture, in which 90 wt.% of polyethylene (Mw 374,000 g/mol, PDI 4.25) and 10 wt.% of an ethylene vinyl acetate copolymer (Mw 280,000 g/mol, PDI 2.15) having 20 wt.% of a vinyl acetate content were mixed, was used as a resin mixture.

### (6) Example 6

A separator was prepared in the same manner as in Example 1, except that a mixture, in which 70 wt.% of polyethylene (Mw 374,000 g/mol, PDI 4.25) and 30 wt.% of an ethylene vinyl acetate copolymer (Mw 310,000g/mol, PDI 2.3) having 10 wt.% of a vinyl acetate content were mixed, was used as a resin mixture.

### (7) Comparative Example 1

A separator was prepared in the same manner as in Example 1, except that 100 wt.% of polyethylene (Mw 374,000 g/mol, PDI 4.25) was used instead of a resin mixture.

### (8) Comparative Example 2

A separator was prepared in the same manner as in Example 1, except that a mixture, in which 90 wt.% of polyethylene (Mw 374,000 g/mol, PDI 4.25) and 10 wt.% of an ethylene vinyl acetate copolymer (Mw 324,000 g/mol, PDI 2.4) having 25 wt.% of a vinyl acetate content were mixed, was used as a resin mixture.

### (9) Comparative Example 3

A separator was prepared in the same manner as in Example 1, except that a mixture, in which 90 wt.% of polyethylene (Mw 374,000 g/mol, PDI 4.25) and 10 wt.% of an ethylene vinyl acetate copolymer (Mw 307,000 g/mol, PDI 2.2) having 30 wt.% of a vinyl acetate content were mixed, was used as a resin mixture.

### (10) Comparative Example 4

A separator was prepared in the same manner as in Example 1, except that a mixture, in which 85 wt.% of polyethylene (Mw 374,000 g/mol, PDI 4.25) and 15 wt.% of an ethylene vinyl acetate copolymer (Mw 324,000 g/mol, PDI 2.4) having 25 wt.% of a vinyl acetate content were mixed, was used as a resin mixture.

### (11) Comparative Example 5

A separator was prepared in the same manner as in Example 1, except that a mixture, in which 80 wt.% of polyethylene (Mw 374,000 g/mol, PDI 4.25) and 20 wt.% of an ethylene vinyl acetate copolymer (Mw 324,000 g/mol, PDI 2.4) having 25 wt.% of a vinyl acetate content were mixed, was used as a resin mixture.

### 2. Evaluation of separator properties

### (1) Evaluation of thickness

For each of the separators prepared according to Examples and Comparative Examples, the thickness was measured using a thickness measuring instrument (Mitutoyo, VL-50S-B) and the results are shown in Table 1 below.

### (2) Evaluation of porosity

For each of the separators prepared according to Examples and Comparative Examples, porosity was measured using the CFP-1500-AE equipment (Porous Materials Inc.) and the results are shown in Table 1 below.

### (3) Evaluation of puncture strength

For each of the separators prepared according to Examples and Comparative Examples, the maximum load value when stabbed at a speed of 120 mm/min using a needle with a diameter of 1 mm (0.5 mmR) was measured. Five test runs were undertaken for each example using puncture fixture as the testing machine by Instron according to ASTM D5748-95 and ASTM D4649, wherein the testing machine calculated the standard deviation and average value from the 5 test runs of an example. The test results are shown in Table 1 below.

### (4) Evaluation of electrolyte impregnation (PC drop area)

For each of the separators prepared according to Examples and Comparative Examples, 2 µL of a propylene carbonate solution was dropped on the surface of each separator using a Drop Shape Analysis System (KRUSS, DSA100), and after 5 minutes, the PC drop area was measured and the results are shown in Table 1 below.

### (5) Evaluation of shut-down temperature

While measuring the air permeability of each of the separators prepared according to Examples and Comparative Examples, each separator was exposed to an elevated temperature condition (5°C/min starting at 30°C). In particular, the temperature at which the air permeability (Gurley value) of the separator exceeds 100,000 sec/100 cc for the first time was measured and the results are shown in Table 1 below. The air permeability of the separator was measured using an air permeability meter (Asahi Seiko, EGO-IT) according to JIS P8117.

**[Table 1]**

| | Resin Mixture | | Thicknes s (µm) | Porosit y (%) | Punctur e Strength (gf) | Standar d Deviatio n of Punctur e Strength | PC Drop Area (mm ) | Shut-down Temperat ure (°C) |
|---|---|---|---|---|---|---|---|---|
| Example 1 | PE+ EV A | applying 5 wt.% of EVA having 10 wt.% of VA | 9.2 | 46 | 251 | 6.32 | 12.4 | 138 |
| Example 2 | PE+ EV A | applying 10 wt.% of EVA having 10 wt.% of VA | 9.4 | 44 | 243 | 5.14 | 14.5 | 136 |
| Example 3 | PE+ EV A | applying 15 wt.% of EVA having 10 wt.% of VA | 9.2 | 45 | 220 | 6.67 | 16.5 | 134 |
| Example 4 | PE+ EV A | applying 20 wt.% of EVA having 10 wt.% of VA | 9.4 | 45 | 208 | 6.20 | 17.9 | 131 |
| Example 5 | PE+ EV A | applying 10 wt.% of EVA having 20 wt.% of VA | 8.9 | 47 | 218 | 5.45 | 15.7 | 130 |
| Example 6 | PE+ EV A | applying 30 wt.% of EVA having 10 wt.% of VA | 9.0 | 46 | 166 | 7.16 | 18.6 | 130 |
| Compara tive Example 1 | PE+ EV A | | 8.8 | 45 | 247 | 8.12 | 7.5 | 141 |
| Compara tive Example 2 | PE alon e | applying 10 wt.% of EVA having 25 wt.% of VA | 9.1 | 44 | 158 | 8.20 | 17.1 | 130 |
| Compara tive Example 3 | PE+ EV A | applying 10 wt.% of EVA having 30 wt.% of VA | 9.1 | 47 | 154 | 9.54 | 18.9 | 129 |
| Compara tive Example 4 | PE+ EV A | applying 15 wt.% of EVA having 25 wt.% of VA | 9.4 | 46 | 149 | 9.12 | 20.3 | 125 |
| Compara tive Example 5 | PE+ EV A | applying 20 wt.% of EVA having 25 wt.% of VA | 9.3 | 46 | 142 | 12.50 | 22.1 | 122 |

Referring to Table 1, in the case of Examples and Comparative Examples, there was no significant difference in thickness or porosity of the separators. With respect to the puncture strength value, in the case of Examples other than Example 6, it was measured to be at least 208 gf (Example 4) and at most 251 gf (Example 1). Even in the case of Example 6, which showed the lowest puncture strength among Examples, it was measured to be at 160 gf or greater. In contrast, in Comparative Examples 2 to 5, the puncture strength value was measured to be less than 160 gf.

Moreover, although Comparative Example 1 showed a relatively high puncture strength value, it showed a very poor measured value of 7.5 mm in the evaluation of PC drop area showing electrolyte impregnation, thus indicating that there is a difficulty in achieving the purpose of the present disclosure.

Further, although the standard deviation of puncture strength in Examples showed a relatively small value of up to 7.16 (Example 6), the standard deviation of the puncture strength in Comparative Examples was at least 8, thus confirming that the separators prepared according to Comparative Examples have non-uniform physical properties compared to those prepared according to Examples.

As a result of evaluating the physical properties of the separators, the separator of Comparative Example 1 showed an excellent puncture strength but poor electrolyte impregnation, whereas those of Comparative Examples 2 to 5 showed excellent electrolyte impregnation but low puncture strength. However, all of the separators of Examples according to the present disclosure were shown to be excellent in both puncture strength and electrolyte impregnation.

In this specification, preferred embodiments of the present disclosure are disclosed. Although specific terms are used herein, they are only used in a general sense to easily explain the technical contents of the present disclosure and help understanding of the present invention, and are not intended to limit the scope of the present disclosure.

Therefore, the scope of the invention should not be determined by the embodiments described, but by definition in the claims.

## Claims

1. A separator for an electrochemical device comprising a resin mixture containing ethylene vinyl acetate copolymer (EVA) and polyethylene (PE), wherein the ethylene vinyl acetate copolymer (EVA) contains 20 wt.% or less of vinyl acetate (VA) based on the total amount of the ethylene vinyl acetate copolymer (EVA);
**characterized in that**
the content of the ethylene vinyl acetate copolymer in the resin mixture is from 5 wt.% to 30 wt.-% based on the total amount of the resin mixture.

2. The separator for an electrochemical device according to claim 1, wherein the ethylene vinyl acetate copolymer (EVA) contains 1 to 20 wt.% of vinyl acetate (VA) based on the total amount of the ethylene vinyl acetate copolymer (EVA).

3. The separator for an electrochemical device according to one of the preceding claims, the ethylene vinyl acetate copolymer (EVA) contains 80 to 99 wt.% of ethylene (C2) based on the total amount of the ethylene vinyl acetate copolymer (EVA).

4. The separator for an electrochemical device according to one of the preceding claims, wherein the ethylene vinyl acetate copolymer (EVA) contains ethylene (C2) and vinyl acetate (VA) and wherein the ratio of ethylene (C2) to vinyl acetate (VA) is in a range of 3.5 to 20.

5. The separator for an electrochemical device according to one of the preceding claims, wherein the resin mixture contains 0.1 to 3 wt.% of vinyl acetate based on the total weight of the resin mixture;
and/ or
97 to 99.9 wt.% of ethylene (C2) based on the total weight of the resin mixture.

6. The separator for an electrochemical device according to one of the preceding claims, wherein the weight average molecular weight (Mw) of the ethylene vinyl acetate copolymer (EVA) is 320 000 g/ mol or less measured as set forth in the description;
and/ or
the ethylene vinyl acetate copolymer (EVA) has a melting point (Tm) of 80°C to 130°C measured by differential scanning calorimetry (DSC).

7. The separator for an electrochemical device according to one of the preceding claims, wherein the resin mixture has a degree of crystallinity of 20% to 50%, wherein degree of crystallinity is expressed as percentage (%) by dividing the melting enthalpy (ΔH) value actually measured in differential scanning calorimetry (DSC) measurement by the melting enthalpy (ΔH) value of a theoretically perfect crystal (degree of crystallinity 100%).

8. The separator for an electrochemical device according to one of the preceding claims, wherein the separator for an electrochemical device has a thickness of 1 µm to 100 µm ;
and/ or
a porosity of 20 vol.% to 70 vol.% and an average pore diameter of 0.01 µm to 1 µm measured according to Brunauer-Emmett-Teller (BET) measurement method using nitrogen gas or according to mercury porosimeter and ASTM D-2873.

9. The separator for an electrochemical device according to one of the preceding claims, wherein the separator for an electrochemical device has a puncture strength of 160 gf or higher, preferably of 200 gf or higher measured as set forth in the description;
and/ or
a standard deviation of puncture strength of 8.0 or less, preferably 7.0 or less measured as set forth in the description.

10. The separator for an electrochemical device according to one of the preceding claims, wherein the separator for an electrochemical device has a PC drop area of higher than 8 mm measured as set forth in the description.

11. The separator for an electrochemical device according to one of the preceding claims, wherein the separator for an electrochemical device has a shut-down temperature of 100°C to 145°C measured as set forth in the description.

12. The separator for an electrochemical device according to one of the preceding claims, wherein the separator for an electrochemical device is a wet separator.

13. A coated separator for an electrochemical device, wherein the separator according to one of the preceding claims is coated on one or both sides with a porous coating layer, wherein the porous coating layer comprises inorganic particles and a binder polymer.

14. An electrochemical device comprising a positive electrode, a negative electrode, and a separator interposed between the positive electrode and the negative electrode, wherein the separator is the separator for an electrochemical device according to one of the preceding claims 1 to 12, or the coated separator for an electrochemical device according to claim 13.

## Patentansprüche

1. Separator für eine elektrochemische Vorrichtung, umfassend eine Harzmischung, die Ethylen-Vinylacetat-Copolymer (EVA) und Polyethylen (PE) enthält, wobei das Ethylen-Vinylacetat-Copolymer (EVA) 20 Gew.-% oder weniger Vinylacetat (VA), bezogen auf die Gesamtmenge des Ethylen-Vinylacetat-Copolymers (EVA), enthält;
**dadurch gekennzeichnet, dass**
der Gehalt des Ethylen-Vinylacetat-Copolymers in der Harzmischung 5 Gew.-% bis 30 Gew.-%, bezogen auf die Gesamtmenge der Harzmischung, beträgt.

2. Separator für eine elektrochemische Vorrichtung nach Anspruch 1, wobei das Ethylen-Vinylacetat-Copolymer (EVA) 1 bis 20 Gew.-% Vinylacetat (VA), bezogen auf die Gesamtmenge des Ethylen-Vinylacetat-Copolymers (EVA), enthält.

3. Separator für eine elektrochemische Vorrichtung nach einem der vorhergehenden Ansprüche, wobei das Ethylen-Vinylacetat-Copolymer (EVA) 80 bis 99 Gew.-% Ethylen (C2), bezogen auf die Gesamtmenge des Ethylen-Vinylacetat-Copolymers (EVA), enthält.

4. Separator für eine elektrochemische Vorrichtung nach einem der vorhergehenden Ansprüche, wobei das Ethylen-Vinylacetat-Copolymer (EVA) Ethylen (C2) und Vinylacetat (VA) enthält und wobei das Verhältnis von Ethylen (C2) zu Vinylacetat (VA) in einem Bereich von 3,5 bis 20 liegt.

5. Separator für eine elektrochemische Vorrichtung nach einem der vorhergehenden Ansprüche, wobei die Harzmischung 0,1 bis 3 Gew.-% Vinylacetat, bezogen auf das Gesamtgewicht der Harzmischung, enthält;
und/oder
97 bis 99,9 Gew.-% Ethylen (C2), bezogen auf das Gesamtgewicht der Harzmischung, enthält.

6. Separator für eine elektrochemische Vorrichtung nach einem der vorhergehenden Ansprüche, wobei das gewichtsmittlere Molekulargewicht (Mw) des Ethylen-Vinylacetat-Copolymers (EVA) 320.000 g/mol oder weniger beträgt, gemessen wie in der Beschreibung dargelegt;
und/oder
das Ethylen-Vinylacetat-Copolymer (EVA) einen Schmelzpunkt (Tm) von 80 °C bis 130 °C aufweist, gemessen durch Differentialscanningkalorimetrie (DSC).

7. Separator für eine elektrochemische Vorrichtung nach einem der vorhergehenden Ansprüche, wobei die Harzmischung einen Kristallinitätsgrad von 20 % bis 50 % aufweist, wobei der Kristallinitätsgrad als Prozentsatz (%) ausgedrückt wird, indem der Schmelzenthalpie-(ΔH)-Wert, der tatsächlich bei der Differentialscanningkalorimetrie-(DSC)-Messung gemessen wird, durch den Schmelzenthalpie-(ΔH)-Wert eines theoretisch perfekten Kristalls (Kristallinitätsgrad 100 %) dividiert wird.

8. Separator für eine elektrochemische Vorrichtung nach einem der vorhergehenden Ansprüche, wobei der Separator für eine elektrochemische Vorrichtung eine Dicke von 1 µm bis 100 µm aufweist;
und/oder
eine Porosität von 20 Vol.-% bis 70 Vol.-% und einen mittleren Porendurchmesser von 0,01 µm bis 1 µm aufweist, gemessen gemäß dem Brunauer-Emmett-Teller-(BET)-Messverfahren unter Verwendung von Stickstoffgas oder gemäß Quecksilberporosimeter und ASTM D-2873.

9. Separator für eine elektrochemische Vorrichtung nach einem der vorhergehenden Ansprüche, wobei der Separator für eine elektrochemische Vorrichtung eine Durchstoßfestigkeit von 160 gf oder mehr, vorzugsweise von 200 gf oder mehr aufweist, gemessen wie in der Beschreibung dargelegt;
und/oder
eine Standardabweichung der Durchstoßfestigkeit von 8,0 oder weniger, vorzugsweise 7,0 oder weniger aufweist, gemessen wie in der Beschreibung dargelegt.

10. Separator für eine elektrochemische Vorrichtung nach einem der vorhergehenden Ansprüche, wobei der Separator für eine elektrochemische Vorrichtung eine PC-Tropffläche von mehr als 8 mm aufweist, gemessen wie in der Beschreibung dargelegt.

11. Separator für eine elektrochemische Vorrichtung nach einem der vorhergehenden Ansprüche, wobei der Separator für eine elektrochemische Vorrichtung eine Abschalttemperatur von 100 °C bis 145 °C aufweist, gemessen wie in der Beschreibung dargelegt.

12. Separator für eine elektrochemische Vorrichtung nach einem der vorhergehenden Ansprüche, wobei der Separator für eine elektrochemische Vorrichtung ein Nassseparator ist.

13. Beschichteter Separator für eine elektrochemische Vorrichtung, wobei der Separator nach einem der vorhergehenden Ansprüche auf einer oder beiden Seiten mit einer porösen Beschichtungsschicht beschichtet ist, wobei die poröse Beschichtungsschicht anorganische Teilchen und ein Bindemittelpolymer umfasst.

14. Elektrochemische Vorrichtung, umfassend eine positive Elektrode, eine negative Elektrode und einen Separator, der zwischen der positiven Elektrode und der negativen Elektrode angeordnet ist, wobei der Separator der Separator für eine elektrochemische Vorrichtung nach einem der vorhergehenden Ansprüche 1 bis 12 oder der beschichtete Separator für eine elektrochemische Vorrichtung nach Anspruch 13 ist.

## Revendications

1. Séparateur pour un dispositif électrochimique comprenant un mélange de résine contenant un copolymère d'éthylène-acétate de vinyle (EVA) et un polyéthylène (PE), dans lequel le copolymère d'éthylène-acétate de vinyle (EVA) contient 20 % en poids ou moins d'acétate de vinyle (VA) sur la base de la quantité totale du copolymère d'éthylène-acétate de vinyle (EVA) ;
**caractérisé en ce que**
la teneur en copolymère d'éthylène-acétate de vinyle dans le mélange de résine est de 5 % en poids à 30 % en poids sur la base de la quantité totale du mélange de résine.

2. Séparateur pour un dispositif électrochimique selon la revendication 1, dans lequel le copolymère d'éthylène-acétate de vinyle (EVA) contient 1 à 20 % en poids d'acétate de vinyle (VA) sur la base de la quantité totale du copolymère d'éthylène-acétate de vinyle (EVA).

3. Séparateur pour un dispositif électrochimique selon l'une quelconque des revendications précédentes, le copolymère d'éthylène-acétate de vinyle (EVA) contient 80 à 99 % en poids d'éthylène (C2) sur la base de la quantité totale du copolymère d'éthylène-acétate de vinyle (EVA).

4. Séparateur pour un dispositif électrochimique selon l'une quelconque des revendications précédentes, dans lequel le copolymère d'éthylène-acétate de vinyle (EVA) contient un éthylène (C2) et un acétate de vinyle (VA) et dans lequel le rapport de l'éthylène (C2) à l'acétate de vinyle (VA) est dans une plage de 3,5 à 20.

5. Séparateur pour un dispositif électrochimique selon l'une quelconque des revendications précédentes, dans lequel le mélange de résine contient 0,1 à 3 % en poids d'acétate de vinyle sur la base du poids total du mélange de résine ;
et/ou
97 à 99,9 % en poids d'éthylène (C2) sur la base du poids total du mélange de résine.

6. Séparateur pour un dispositif électrochimique selon l'une quelconque des revendications précédentes, dans lequel le poids moléculaire moyen en poids (Mw) du copolymère d'éthylène-acétate de vinyle (EVA) est 320 000 g/mole ou moins, mesuré comme décrit dans la description ;
et/ou
le copolymère d'éthylène-acétate de vinyle (EVA) a un point de fusion (Tm) de 80°C à 130°C mesuré par calorimétrie différentielle à balayage (DSC).

7. Séparateur pour un dispositif électrochimique selon l'une quelconque des revendications précédentes, dans lequel le mélange de résine a un degré de cristallinité de 20 % à 50 %, dans lequel le degré de cristallinité est exprimé en pourcentage (%) en divisant la valeur de l'enthalpie de fusion (ΔH) qui est mesurée en mesure de calorimétrie différentielle à balayage (DSC) par la valeur de l'enthalpie de fusion (ΔH) d'un cristal théoriquement parfait (degré de cristallinité 100 %).

8. Séparateur pour un dispositif électrochimique selon l'une quelconque des revendications précédentes, dans lequel le séparateur pour un dispositif électrochimique a une épaisseur de 1 µm à 100 µm ;
et/ou
une porosité de 20 % en volume à 70 % en volume et un diamètre de pore moyen de 0,01 µm à 1 µm, mesurés par la méthode de mesure de Brunauer-Emmett-Teller (BET) en utilisant du gaz d'azote ou par un porosimètre au mercure et ASTM D-2873.

9. Séparateur pour un dispositif électrochimique selon l'une quelconque des revendications précédentes, dans lequel le séparateur pour un dispositif électrochimique a une résistance à la perforation égale ou supérieure à 160 gf, de préférence égale ou supérieure à 200 gf, mesurée comme décrit dans la description ;
et/ou
un écart standard de résistance à la perforation égal ou inférieur à 8,0 ou moins, de préférence égal ou inférieur à 7,0, mesuré comme décrit dans la description.

10. Séparateur pour un dispositif électrochimique selon l'une quelconque des revendications précédentes, dans lequel le séparateur pour un dispositif électrochimique a une zone de goutte de carbonate de propylène (CP) supérieure à 8 mm, mesurée comme décrit dans la description.

11. Séparateur pour un dispositif électrochimique selon l'une quelconque des revendications précédentes, dans lequel le séparateur pour un dispositif électrochimique a une température de mise à l'arrêt de 100°C à 145°C, mesurée comme décrit dans la description.

12. Séparateur pour un dispositif électrochimique selon l'une quelconque des revendications précédentes, dans lequel le séparateur pour un dispositif électrochimique est un séparateur humide.

13. Séparateur revêtu pour un dispositif électrochimique, dans lequel le séparateur selon l'une quelconque des revendications précédentes est revêtu sur un côté ou les deux par une couche de revêtement poreux, dans lequel la couche de revêtement poreux comprend des particules inorganiques et un polymère liant.

14. Dispositif électrochimique comprenant une électrode positive, une électrode négative, et un séparateur interposé entre l'électrode positive et l'électrode négative, dans lequel le séparateur est le séparateur pour un dispositif électrochimique selon l'une quelconque des revendications précédentes 1 à 12, ou le séparateur revêtu pour un dispositif électrochimique selon la revendication 13.
